# EUROPÄISCHE PATENTSCHRIFT

(11) **EP 0 627 338 B1**
(45) Veröffentlichungstag und Bekanntmachung des Hinweises auf die Patenterteilung: **09.08.1995**
(21) Anmeldenummer: 93108491.7
(22) Anmeldetag: 26.05.1993
(51) Int. Cl.: B60N 2/24

(54) **Einheitsteil-Sitz**
Unitary part seat
Siège à partie unitaire

(43) Veröffentlichungstag der Anmeldung: 07.12.1994
(73) Patentinhaber: Ignaz Vogel GmbH & Co KG, Fahrzeugsitze, D-76228 Karlsruhe (DE)
(72) Erfinder: Vogel, Ignaz, D-76228 Karlsruhe (DE)
(74) Vertreter: Trappenberg, Hans

(56) Entgegenhaltungen:
- EP-A- 0 481 292
- DE-A- 2 751 110
- DE-B- 2 759 596
- FR-A- 2 503 643

## Beschreibung

Die Erfindung betrifft einen Fahrgastsitz, insbesondere für den Einbau in Landfahrzeugen, mit einem Sitzteil und einem Rückenteil, welche jeweils einen Unterbau und ein Schaumteil aufweisen.

Durch die in letzter Zeit sehr stark gewachsene Verkehrsdichte wird innerhalb der Bevölkerung und auch der Verwaltung verstärkt darüber nachgedacht, wie man die Probleme des Straßenverkehrs lösen kann. Eine wesentliche Verbesserung der Verkehrssituation würde die vermehrte Benutzung öffentlicher Verkehrsmittel mit sich bringen.

Es ist einsichtig, daß viele Menschen nur bereit sind auf öffentliche Verkehrsmittel umzusteigen, wenn zum einen das Angebot hinsichtlich der Häufigkeit der Verkehrsmittel verbessert wird. Zum anderen sollte der Komfort, was beispielsweise die Sauberkeit und Bequemlichkeit von Fahrgastsitzen angeht, verbessert werden.

Da in öffentlichen Verkehrsmitteln damit gerechnet werden muß, daß Fahrgastsitze beschädigt oder beschmutzt werden, ist es erforderlich, daß beschädigte oder verschmutzte Teile leicht ausgewechselt werden können.

Der schnelle Ersatz von beschädigten Sitzteilen erfordert eine entsprechende Lagernaltung. Da unterschiedliche Ausführungen von Fahrgastsitzen in den Verkehrsmitteln eingebaut sind, ist die Lagerhaltung entsprechend umfangreich. Aufgrund der unterschiedlichen Ausgestaltung des Sitzteils und des Rückenteils eines Fahrgastsitzes müssen pro Fahrgastsitz unterschiedliche Schaumteile und Unterbauten im Lager bereitgehalten werden, das heißt die Menge der im Lager bereitgehaltenen unterschiedlichen Ersatzteile verdoppelt sich.

Aus der FR-A-2 503 643 ist ein Fahrgastsitz bekannt, mit einem Sitzteil und einem Rückenteil, welche jeweils einen Unterbau und ein Schaumteil aufweisen, wobei das Schaumteil des Sitzteils und das Schaumteil des Rückenteils eine solche Form haben, daß sie gegeneinander austauschbar sind. Die Schaumteile sind jedoch so geformt, daß sie im Bereich des Median-Profils eine geschwungene Form haben.

Des weiteren ist aus der DE-A-2 759 596 ein Fahrgastsitz bekannt, dessen Sitzelement und Rückenlehnenelement, welche aus einer Polsterung und beispielsweise aus Blech bestehen, austauschbar gleich ausgebildet sind. Obwohl der Verlauf des Median-Profils nicht zu erkennen ist, kann der Druckschrift doch entnommen werden, daß die Sitzfläche zur Rückenlehne einen Winkel von etwa 95° bildet.

Es ist Aufgabe der Erfindung, einen eingangs genannten Fahrgastsitz derart auszubilden, daß bei vereinfachter Herstellung und Lagerhaltung beschädigte Teile leicht ausgewechselt werden können, wobei ein Höchstmaß an Sitzkomfort erreicht werden soll.

Die Lösung dieser Aufgabe ergibt sich durch die kennzeichnenden Merkmale des Anspruchs 1.

Vorteilhafte Weiterbildungen der Erfindung ergeben sich aus den Unteransprüchen.

Bei einem erfindungsgemäßen Fahrgastsitz haben das Schaumteil des Sitzteils und das Schaumteil des Rückenteils eine solche Form, daß sie gegeneinander austauschbar sind. Hierdurch braucht nur noch eine Ausführung von Schaumteilen pro Fahrgastsitz hergestellt beziehungsweise auf Lager gehalten werden. Die Verwendung eines Einheitsschaumteils bedeutet eine Vereinfachung bei der Herstellung des Fahrgastsitzes. Statt wie bisher üblich zwei unterschiedliche Polsterteile herzustellen, wird nun nur noch ein Teil hergestellt. Es entfallen die Werkzeuge zur Herstellung des zweiten Teils. Da nur noch ein Werkzeug für ein Schaumteil benötigt wird, können mehrere gleiche Werkzeuge hergestellt werden, was sich positiv auf die Herstellkosten des Werkzeugs auswirkt. Darüber hinaus können leicht Ersatzwerkzeuge bereitgehalten werden, da ja nur noch eine Ausführung bereitgehalten werden muß.

Darüber hinaus wird die Menge der im Lager vorrätig zu haltenden Ersatzteile erheblich verringert. Man kommt daher mit bedeutend weniger Lagerraum aus, was sich sehr vorteilhaft auf die Kosten auswirkt.

Der Unterbau des Sitzteils und der Unterbau des Rückenteils haben eine solche Form, daß sie gegeneinander austauschbar sind. Hierdurch wird eine weitere Vereinfachung bei der Reparatur und der Herstellung der Fahrgastsitze erreicht. Der vereinfachte Austausch von Sitzteilen bleibt somit nicht auf die Polsterteile beschränkt, sondern erstreckt sich auch auf die Rückenteile. Hierdurch kann das gesamte Sitzteil gegen das Rückenteil ausgetauscht werden. Dadurch können beschädigte Teile im Fahrzeug sehr schnell ausgewechselt werden. Ein spezieller Austausch von beispielsweise nur einem Polsterteil braucht nicht mehr im Fahrzeug erfolgen, sondern kann in einer Werkstatt vorgenommen werden. Eine vorteilhafte Weiterbildung der Erfindung sieht sogar vor, daß Unterbau des Sitzteils und des Rückenteils sowie Schaumteil des Sitzteils und des Rückenteils in ihrer Ausführungsform jeweils identisch sind. Durch die identische Ausbildung der Teile braucht nun pro Sitz nur noch ein Schaumteil und ein Unterbau hergestellt werden. Die Anzahl der unterschiedlichen Polsterteile sowie Unterbauten halbiert sich. Die Vorteile, die der erfindungsgemäße Sitz mit sich bringt, beginnen bei der Herstellung der Einzelteile für einen Fahrgastsitz und enden beim Auswechseln von beschädigten Sitzteilen.

Bei der Erfindung stellt das Schaumteil im Verlauf des Median-Profils eine Gerade dar, welche im als Sitzteil eingebauten Zustand gegenüber der Waagereechten einen Winkel b von 2° bis 6°, vorzugsweise 4°, einschließt. Das Median-Profil des Sitzes wird von zwei Geraden gebildet, welche einen Winkel a von 90° bis 120°, vorzugsweise 102°, bilden. Hierdurch wird eine Sitzform geschaffen, die neben dem Vorteil einer einfachen und schnellen Austauschbarkeit des Sitzteils beziehungsweise des Rückenteils dem Fahrgast eine zufriedenstellende Bequemlichkeit bietet. Als Median-Profil wird die Linie des Querschnitts des Sitzes in der Mitte zwischen den beiden Seiten bezeichnet, welche durch die dem Fahrgast zugewandte Oberfläche des Sitzes gebildet wird.

Durch ein Leichtmetall-Gestell des Sitzteils beziehungsweise Rückenteils, welches aus einem Vierkantrohr besteht und an dem im eingebauten Zustand des Sitzteils beziehungsweise Rückenteils hinteren Ende beziehungsweise unteren Ende auf die Schenkel von winkelförmigen Verbindungsstücken aufsteckbar ist, wird eine besonders einfache Austauschbarkeit der Teile erreicht. Des weiteren erhält der Sitz durch die Verwendung von Leichtmetall ein geringes Gewicht, was ebenfalls als besonders positiv zu beurteilen ist.

Die Verbindung des Rückenteils mit den Verbindungsstücken mittels einer Klemmverbindung sowie des Sitzteils mit den Verbindungsstücken mittels einer Schraubverbindung erlaubt es, den Sitz insbesondere im Fahrzeug schnell und einfach auszuwechseln.

Durch die Befestigung der Verbindungsstücke auf einem Kastenprofil, welches sich quer zu dem Sitzteil erstreckt, besteht die Möglichkeit, den Sitz seitlich zu verschieben, so daß er im Fahrzeug in einer gewünschten Position befestigt werden kann. Durch den Hauptkasten, welcher einen Querschnitt hat, dessen im eingebauten Zustand obere Seite gerade verläuft und dessen im eingebauten Zustand untere Seite einen Radius aufweist, erhält man ein besonders stabiles Tragprofil. Insbesondere die Ausgestaltung der unteren Seite des Hauptkastens als Schale wirkt sich im Hinblick auf die Stabilität des Profils sehr günstig aus. Der jeweils in den Seitenwänden vorhandene weitere Kasten mit Befestigungsschienen gestattet es, die Verbindungsstücke und damit das Sitzteil sehr fest mit dem Profil zu verbinden, da die Befestigungsschrauben mit einer sehr großen Zugkraft angezogen werden können.

Der erfindungsgemäße Aufbau des Fahrgastsitzes erlaubt es, den Sitz sortenrein aufzubauen. Das heißt, Schaumteile, Kunststoffteile, Aluminiumteile usw. sind nicht miteinander verschmolzen. Bei der Entsorgung des Sitzes kann er somit soweit zerlegt werden, daß alle verschiedenen Materialsorten voneinander getrennt gesammelt werden können. Zur leichten und schnellen Auswechselbarkeit des Bezuges ist der Bezug des Sitzteils beziehungsweise Rückenteils als schnell wechselbarer Bezug ausgebildet.

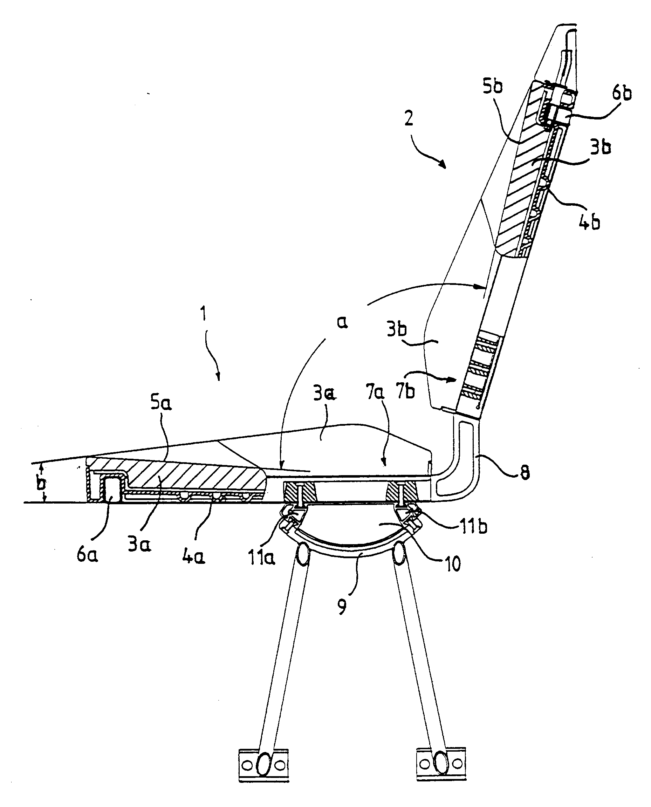

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt die einzige Figur eine Seitenansicht des Sitzes, teilweise im Schnitt.

Wie der Figur zu entnehmen ist, weist der Fahrgastsitz ein Sitzteil (1) und ein Rückenteil (2) auf. Sitzteil (1) und Rückenteil (2) haben jeweils ein Schaumteil (3a) beziehungsweise (3b) und einen Unterbau (4a) beziehungsweise (4b). Die Schaumteile (3a und 3b) sind identisch. Die Schaumteile (3a, 3b) haben im Verlauf des Median-Profils eine Gerade, welche, wenn das Schaumteil (3a) als sitzteil eingebaut ist, gegenüber der Waagerechten einen Winkel von 4° einschließt.

Die Schaumteile (3a) beziehungsweise (3b) befinden sich jeweils in einem Unterbau (4a) beziehungsweise (4b). Der Unterbau (4a) des Sitzteils (1) und der Unterbau (4b) des Rückenteils (2) haben eine solche Form, daß sie gegeneinander austauschbar sind. Der Unterbau (4a) beziehungsweise (4b) weist ein Gestell (6a) beziehungsweise (6b) auf, welches aus einem Vierkantrohr aus Aluminium besteht. Das Gestell (6a) beziehungsweise (6b) ist U-förmig gebogen, wobei die Schenkel des U nach hinten beziehungsweise nach unten weisen. Zur Befestigung des Sitzteils (1) beziehungsweise des Rückenteils (2) wird das Gestell (6a) beziehungsweise (6b) mit seinen Schenkeln auf die Schenkel von winkelförmigen Verbindungsstücken (8) geschoben. Das Rückenteil (2) ist mit dem Verbindungsstück (8) mittels einer Klemmverbindung verbunden. Die Klemmverbindung ist derart ausgeführt, daß das Verbindungsstück an dem entsprechenden Schenkel einen Schlitz aufweist, welcher sich parallel zur hinteren Oberfläche in Längsrichtung des Schenkels erstreckt. Des weiteren weist der Schenkel drei Bohrungen auf, welche mit Gewinde versehen sind und sich von der vorderen Oberfläche des Schenkels bis zum Schlitz quer durch den Schenkel erstrecken. Das Gestell (6b) des Rückenteils (2) weist an den zu den Bohrungen korrespondierenden Stellen drei Löcher auf, durch welche Madenschrauben in die Bohrungen eingeführt werden können. Die Madenschrauben werden so tief in die Bohrungen eingedreht, daß sie an der Seite des Schlitzes aus den Bohrungen austreten und auf die verbleibende, durch den Schlitz abgetrennte, blattfederartige Lasche des Schenkels treffen. Durch weiteres Hereindrehen der Schrauben in die Bohrungen wird die Lasche vom Schenkel abgespreizt, wodurch sich der Schenkel fest in dem aufgesteckten Rahmen (6b) festklemmt.

Der Schenkel des Verbindungsstückes, an welchem das Sitzteil (1) befestigt wird, weist zwei Bohrungen auf, welche sich quer durch den Schenkel, im eingebauten Zustand des Verbindungsstücks, von oben nach unten erstrecken. Der U-förmige Rahmen (6a) des Sitzteils (1) ist auf die Schenkel der Verbindungsstücke (8) gesteckt und weist an den zu den Bohrungen des Schenkels (8) korrespondierenden Stellen Öffnungen auf.

Der Sitz ist auf einem kastenförmigen Profil (9) befestigt, welches sich quer zum Sitz (1) erstreckt. Das Profil (9) weist einen Hauptkasten (10) auf, welcher einen Querschnitt hat, dessen im eingebauten Zustand obere Seite gerade verläuft und dessen im eingebauten Zustand untere Seite einen Radius aufweist. Das derart ausgestaltete Profil zeichnet sich durch eine besondere Stabilität aus. In den Seitenwänden des Kastenprofils (9) befinden sich weitere Kasten (11a) beziehungsweise (11b). Die Kasten (11a) beziehungsweise (11b) weisen Befestigungsschienen auf, in welchen Befestigungselemente gleitbar angeordnet sind. Zur Befestigung des Sitzteils (1) beziehungsweise des Verbindungsstücks (8) mit dem Kastenholm (9) werden durch die Bohrungen des Schenkels beziehungsweise des Gestells (6a) Schrauben gesteckt, welche in die gleitbaren Befestigungsmittel eingreifen. Die Köpfe der Schrauben sind versenkt, so daß sie nicht überstehen. Solange die Schrauben noch nicht fest angezogen sind, läßt sich der Sitz auf dem Kastenprofil beliebig verschieben. Nachdem der Sitz in die gewünschte Position geschoben wurde, werden die Schrauben fest angezogen. Dank der Befestigungsschienen können die Schrauben mit beliebiger Zugkraft angezogen werden, so daß eine dauerhafte, feste Verbindung besteht.

Der Kastenholm (9) ist einerseits direkt mit der Seitenwand des Fahrzeugs verbunden und andererseits über abgewinkelte Schrägstützen mit der Seitenwand unterhalb der direkten Befestigung verbunden. Hierdurch entfallen die Stützfüße des Fahrgastsitzes, wodurch eine sehr leichte Reinigung des Fahrzeugs möglich ist.

Das winkelförmige Verbindungsstück (8) ist derart ausgebildet, daß sich bei befestigtem Sitzteil (1) beziehungsweise Rückenteil (2) ein Median-Profil ergibt, welches von zwei Geraden (5a, 5b) gebildet wird, welche einen Winkel von 102° bilden. Hierdurch ergibt sich für den Fahrgast auch bei gleich ausgebildetem Sitz- beziehungsweise Rückenteil eine zufriedenstellende Bequemlichkeit.

Der Fahrgastsitz ist so aufgebaut, daß alle Kunststoffteile beziehungsweise Schaumteile beziehungsweise Metallteile voneinander getrennt werden können. Dieser sortenreine Aufbau stellt insbesondere im Hinblick auf eine umweltgerechte Entsorgung einen großen Vorteil dar. Zur schnellen Auswechselbarkeit der Bezüge sind diese schnell wechselbar ausgebildet.

## Patentansprüche

1. Fahrgastsitz, insbesondere für den Einbau in Landfahrzeugen, mit einem Sitzteil (1) und einem Rückenteil (2), welche jeweils einen Unterbau (4) und ein Schaumteil (3) aufweisen, wobei das Schaumteil (3) des Sitzteils (1) und das Schaumteil (3) des Rückenteils (2) eine solche Form haben, daß sie gegeneinander austauschbar sind,
dadurch gekennzeichnet,
daß das Median-Profil von Zwei Geraden (5a, 5b) gebildet wird, welche einen Winkel von 102° einschließen, und daß das Schaumteil (3) gegenüber dem Median-Profil gerade verläuft, wobei im als Sitzteil eingebauten Zustand gegenüber der Waagrechten ein Winkel von 2° bis 6° eingeschlossen wird.

2. Fahrgastsitz nach Anspruch 1,
dadurch gekennzeichnet,
daß der Unterbau (4) des Sitzteils (1) und der Unterbau (4) des Rückenteils (2) eine solche Form haben, daß sie gegeneinander austauschbar sind.

3. Fahrgastsitz nach Anspruch 1 oder 2,
dadurch gekennzeichnet,
daß Unterbau (4) des Sitzteils (1) und des Rückenteils (2) sowie Schaumteil (3) des Sitzteils (1) und des Rückenteils (2) in ihrer Ausführung jeweils identisch sind.

4. Fahrgastsitz nach einem der
Ansprüche 1 bis 3,
dadurch gekennzeichnet,
daß die Gerade (5a) im als Sitzteil eingebauten Zustand gegenüber der Waagerechten einen Winkel von 4° einschließt.

5. Fahrgastsitz nach einem der
Ansprüche 1 bis 4,
dadurch gekennzeichnet,
daß das Sitzteil (1) beziehungsweise Rückenteil (2) ein Gestell (6) aufweisen, welches aus einem Vierkantrohr aus Leichtmetall besteht und an den im eingebauten Zustand hinteren (7a) beziehungsweise unteren (7b) Ende auf die Schenkel von winkelförmigen Verbindungsstücken (8) aufsteckbar ist.

6. Fahrgastsitz nach Anspruch 5,
dadurch gekennzeichnet,
daß das Rückenteil (2) mittels einer Klemmverbindung mit den Verbindungsstücken (8) verbunden ist.

7. Fahrgastsitz nach Anspruch 5 oder 6,
dadurch gekennzeichnet,
daß das Sitzteil (1) mittels einer Schraubverbindung mit den Verbindungsstücken (8) verbunden ist.

8. Fahrgastsitz nach einem der
Ansprüche 5 bis 7,
dadurch gekennzeichnet,
daß die Verbindungsstücke (8) auf einem Kastenprofil (9), welches sich quer zu dem Sitzteil (1) erstreckt, befestigt sind.

9. Fahrgastsitz nach Anspruch 8,
dadurch gekennzeichnet,
daß das Kastenprofil (9) einen Hauptkasten (10) aufweist, welcher einen Querschnitt hat, dessen im eingebauten Zustand obere Seite gerade verläuft und dessen im eingebauten Zustand untere Seite einen Radius aufweist, wobei in den Seitenwänden mindestens jeweils ein weiterer Kasten (11a, 11b) enthalten ist, welcher Befestigungsschienen aufweist.

10. Fahrgastsitz nach einem der
Ansprüche 1 bis 9,
dadurch gekennzeichnet,
daß der Sitz sortenrein aufgebaut ist.

11. Fahrgastsitz nach einem der
Ansprüche 1 bis 10,
dadurch gekennzeichnet,
daß der Bezug des Sitzteils (1) beziehungsweise Rückenteils (2) schnellwechselbar ist.

## Claims

1. A passenger seat, in particular for installation in land vehicles, comprising a seat portion (1) and a back portion (2) which each have a support structure (4) and a foam part (3), wherein the foam part (3) of the seat portion (1) and the foam part (3) of the back portion (2) are of such a shape that they can be interchanged with each other, characterised in that the median profile is formed by two straight lines (5a, 5b) which include an angle of 102°, and that the foam part (3) extends straight with respect to the median profile, wherein in the condition of being installed as the seat portion an angle of from 2° to 6° is included relative to the horizontal.

2. A passenger seat according to claim 1 characterised in that the support structure (4) of the seat portion (1) and the support structure (4) of the back portion (2) are of such a shape that they are interchangeable with each other.

3. A passenger seat according to claim 1 or claim 2 characterised in that the support structure (4) of the seat portion (1) and of the back portion (2) and the foam part (3) of the seat portion (1) and of the back portion (2) are of respectively identical configurations.

4. A passenger seat according to one of claims 1 to 3 characterised in that in the condition of being installed as the seat portion the straight line (5a) includes an angle of 4° relative to the horizontal.

5. A passenger seat according to one of claims 1 to 4 characterised in that the seat portion (1) and the back portion (2) respectively have a frame structure (6) which comprises a quadrangular tube of light metal or alloy and at the ends which are in the installed condition the rear end (7a) and the lower end (7b) respectively can be fitted on to the limbs of angled connecting portions (8).

6. A passenger seat according to claim 5 characterised in that the back portion (2) is connected to the connecting portions (8) by means of a clamping connection.

7. A passenger seat according to claim 5 or claim 6 characterised in that the seat portion (1) is connected to the connecting portions (8) by means of a screw connection.

8. A passenger seat according to one of claims 5 to 7 characterised in that the connecting portions (8) are fixed on a box profile member (9) which extends transversely relative to the seat portion (1).

9. A passenger seat according to claim 8 characterised in that the box profile member (9) has a main box member (10) which is of a cross-section whose side which is the upper side in the installed condition extends straight and whose side which is the lower side in the installed condition has a radius, wherein contained in each of the side walls is at least one respective further box member (11a, 11b) which has fixing rails.

10. A passenger seat according to one of clams 1 to 9 characterised in that the seat is so designed that different constituent materials are easy to separate from each other.

11. A passenger seat according to one of claims 1 to 10 characterised in that the cover of the seat portion (1) and the back portion (2) respectively can be quickly changed.

## Revendications

1. Siège de passager, à utiliser notamment dans des véhicules routiers de transport de personnes, avec une partie d'assise (1) et une partie de dossier (2) qui présentent chacune une infrastructure (4) et un élément (3) en plastique mousse, l'élément (3) en plastique mousse de la partie d'assise (1) et l'élément (3) en plastique mousse de la partie de dossier (2) possédant une forme telle qu'ils sont interchangeables, **caractérisé** en ce que le profil médian est formé par deux droites (5a, 5b) qui forment entre elles un angle de 102°, et en ce que l'élément (3) en plastique mousse s'étend rectilignement par rapport au profil médian, en formant un angle de 2° à 6° avec l'horizontale à l'état monté comme partie d'assise.

2. Siège de passager selon la revendication 1, **caractérisé** en ce que l'infrastructure (4) de la partie d'assise (1) et l'infrastructure (4) de la partie de dossier (2) possèdent une forme telle qu'elles sont interchangeables.

3. Siège de passager selon la revendication 1 ou 2, **caractérisé** en ce que l'infrastructure (4) de la partie d'assise (1) et de la partie de dossier (2) ainsi que l'élément (3) en plastique mousse de la partie d'assise (1) et de la partie de dossier (2) sont d'exécutions respectivement identiques.

4. Siège de passager selon l'une des revendications 1 à 3, **caractérisé** en ce que la droite (5a) forme un angle de 4° avec l'horizontale à l'état monté comme partie d'assise.

5. Siège de passager selon l'une des revendications 1 à 4, **caractérisé** en ce que la partie d'assise (1) ou, respectivement, la partie de dossier (2) présente un bâti (6) qui est constitué d'un tube carré en métal léger et qui, à l'état monté, peut être emboîté par son extrémité arrière (7a) ou, respectivement, inférieure (7b) sur les branches de pièces de liaison coudées (8).

6. Siège de passager selon la revendication 5, **caractérisé** en ce que la partie de dossier (2) est assemblée aux pièces de liaison (8) par un assemblage serré.

7. Siège de passager selon la revendication 5 ou 6, **caractérisé** en ce que la partie d'assise (1) est assemblée aux pièces de liaison (8) par un assemblage boulonné.

8. Siège de passager selon l'une des revendications 5 à 7, **caractérisé** en ce que les pièces de liaison (8) sont fixées sur un profilé en caisson (9) qui s'étend transversalement à la partie d'assise (1).

9. Siège de passager selon la revendication 8, **caractérisé** en ce que le profilé en caisson (9) présente un caisson principal (10) qui possède une section dont le côté supérieur à l'état monté s'étend rectilignement, et dont le côté inférieur à l'état monté forme un rayon, au moins un caisson supplémentaire (11a, 11b) présentant des rails de fixation étant respectivement contenu dans les parois latérales.

10. Siège de passager selon l'une des revendications 1 à 9, **caractérisé** en ce que le siège est conçu d'une structure décomposable.

11. Siège de passager selon l'une des revendications 1 à 10, **caractérisé** en ce que la housse de la partie d'assise (1) ou, respectivement, de la partie de dossier (2) est conçue à remplacement rapide.
